# EUROPEAN PATENT APPLICATION

(11) **EP 3 799 949 A2**
(43) Date of publication of application: **07.04.2021**
(21) Application number: 20199882.0
(22) Date of filing: 02.10.2020
(51) Int. Cl.: B01D 63/08, B01D 67/00, B01D 69/02

(54) **MICROFILTER, MANUFACTURING METHOD AND MICROFILTRATION UNIT**

(30) Priority: 02.10.2019 US 201962909239 P
(71) Applicant: General Biologicals Corporation (TW), Hsinchu County 30076 (TW)
(72) Inventor: Joshi, Pankaj Kumar, 30076 Hsinchu County (TW); Liu, Leo, 30076 Hsinchu County (TW); Wang, Richard, 30076 Hsinchu County (TW); Lin, Frank, 30076 Hsinchu County (TW); Lin, Tsong-Chin, 30076 Hsinchu County (TW)
(74) Representative: Lang, Christian

(57) **Abstract**

A microfilter, a manufacturing method thereof, and a microfiltration unit for holding the microfilter are provided. The microfilter has: a non-epoxy based microfilm; and a plurality of microholes provided on the surface of the non-epoxy based microfilm and penetrating therethrough via UV laser ablation, wherein the surface of the non-epoxy based microfilm is patterned into predetermined sections for locating isolated targets and quick enumeration.

## Description

### FIELD OF THE INVENTION

The present invention relates to a microfilter, which is characterized in that the microfilter is a microfilm that is made of non-epoxy-based materials and is perforated to create a patterned array of microholes.

### DESCRIPTION OF PRIOR ART

The microfilter structure may be a solid membrane structured with microholes to make it a semi-permeable medium. The microfilter structure has been commonly applied to separate micro objects from complex samples.

A large variety of materials have been used to manufacture microfilters such as polymers, metals or composites depending on the field of application. For example, the epoxy based microfilms have been commonly used in biomolecules isolation. Steel based microfilters are common in inkjet nozzles. The epoxy based microfilters are easy to be processed using a lithography method. However, the epoxy based thin films are brittle and difficult to fabricate.

The microfilter structure has been employed in various fields of applications such as in electronic, chemical, food and biotechnology industries. Examples of the microfilter application include size classification of solid objects between micro and macromolecules using microsieves, micro particles isolation from liquids in biomedical filtration or refining processes, uniform distribution of liquid or gas inlet for micro spray generation in printing or drug delivery and an MEMS structure fabrication making use of a deposition mask.

The biomolecules such as bacteria, viruses, cells, vesicles, etc. possess structural flexibility. For a particular target, a precision microfilter is required to optimize the membrane pressure. A uniform array of cylindrical microholes may give the efficient filtration yield and smooth biomolecules isolation from various body fluids such as saliva, blood, urine, dialysis fluid etc.

Methods of manufacturing the microfilters such as track-etching, laser drilling, photolithography, etc. have been studied for microfilter fabrication. A track-etching method is commonly used to generate cylindrical holes in the microfilm but meets with limitation of non-uniformity and pattern repeatability of microholes. A lithography method is good for uniform microholes pattern generation but can only be applied to a limited number of materials. Comparatively, a laser drilling method is applicable to a large number of materials with great uniformity, however, the size range of the microholes is limited to the diameter of the laser spot.

### DETAILED DESCRIPTION OF THE INVENTION

The present invention discloses a non-epoxy based transparent microfilter patterned with microholes, a method of fabricating the microfilter, and a microfiltration unit, or a microfilter holder unit, to carry the filtration process.

First, the present invention provides a microfilter, comprising: a non-epoxy based microfilm, and a plurality of microholes provided on the surface of the non-epoxy based microfilm and penetrating therethrough via laser ablation, wherein the surface of the non-epoxy based microfilm is patterned into predetermined sections to locate isolated targets on the surface of the microfilm and enumerate the number of the isolated targets. In one embodiment, the laser is UV laser.

In one embodiment, the non-epoxy based microfilm is composed of a transparent polymer without an epoxide chain. In a preferred embodiment, the material of the non-epoxy based microfilm is a transparent plastic material. Example of the polymer material of the non-epoxy based microfilm may include any thermoplastic materials such as polycarbonate, polyethylene, polyethylene terephthalate, polyethylene naphthalate, polymethyl methacrylate and polystyrene, etc. In certain embodiments, the material of the non-epoxy based microfilm has non-fluorescent or low fluorescent characteristics in a UV region. The fluorescent characteristics of the microfilm can interfere analysis of isolated components when being studied by using fluorescence microscopy.

In certain embodiments, the non-epoxy based microfilm has a planer surface without any uneven part. In an alternative embodiment, the non-epoxy based microfilm is further coated with a thin film to facilitate the filtration process. In one embodiment, the top surface of the non-epoxy based microfilm has a thin film. In a preferred embodiment, the thin film is a metal film or a metal oxide film. In such an embodiment, the surface of microfilter alters the interaction between a target and the filter surface. For example, a thin film of metal or metal oxide may be coated to improve the hydrophilicity of the microfilter surface.

In one embodiment, the microholes are circular microholes. The diameter of the microholes depends on the size of the screening targets. In another embodiment, the mean diameter of each microhole is less than or equal to 10 µm. In a preferred embodiment, the microholes diameter ranges from 5 to 9 µm. In a more preferred embodiment, the microholes diameter ranges from 6 to 8 µm. In an alternative embodiment, the non-epoxy based microfilm is patterned with a plurality of the circular microholes having a diameter of approximately 7 µm.

In one embodiment, the microholes have cylindrical walls through the non-epoxy based microfilm, i.e., the top and bottom surfaces of the microholes have the same diameter. In an alternative embodiment, the microholes have the tapered walls through the non-epoxy based microfilm, i.e., the diameter of the top and bottom surfaces of the microholes is different from the diameter of the tapered walls. In an alternative embodiment, the shape of the microholes can be rectangular or hexagonal, depending on the screening target. In an alternative embodiment, the microholes are patterned in a uniform array in a straight, staggered or hexagonal geometry in the microfilm.

In certain embodiments, the thickness of the non-epoxy based microfilm is less than or equal to 25 µm. In a preferred embodiment, the thickness of the non-epoxy based microfilm ranges from 5 to 25 µm. The microfilter possesses good strength and flexibility to sustain the pressure during filtration. Another aspect of this invention is that the thickness of the non-epoxy based microfilm is selected to maintain the minimum aspect ratio for microholes. In certain embodiments, the thickness of the microfilm may be equal to the diameter of the microholes. In an alternative embodiment, the aspect ratio of the microfilm thickness and microholes diameter should not be more than 3 µm. The tapered angle of the microholes may increase with an increase of the microfilm thickness.

In certain embodiments, the number of the microholes is designed to optimize the filtration pressure and avoid membrane stress during filtration. The number of the microholes in the filtration area optimized for submicron objects is found to be at least 50,000. In an alternative embodiment, the number of the microholes may increase to reduce the filtration time. In certain embodiments, the gap between two adjacent microholes is optimized at about 20 µm. In an alternative embodiment, the gap between two adjacent microholes may depend on the screening target or the application field. In one embodiment, the gap between two adjacent microholes is 1-100 µm. In a preferred embodiment, the gap between two adjacent microholes is 2-50 µm. In a more preferred embodiment, the gap between two adjacent microholes is 5-25 µm.

The surface of the non-epoxy based microfilm can be patterned into different sections. The number of microholes is distributed into different sections. In certain embodiments, the surface of the non-epoxy based microfilm is patterned into predetermined sections, for example, 16 sections, to locate the isolated targets and quick enumerate the number of the isolated targets. In an alternative embodiment, the filtration area of the non-epoxy based microfilm can be divided into further sections to precisely locate the target. The number of the isolated targets can be precisely enumerated in different sections. In one embodiment, the surface of the non-epoxy based microfilm is divided into 1-50 sections. In a preferred embodiment, the surface of the non-epoxy based microfilm is divided into 5-30 sections. In a more preferred embodiment, the surface of the non-epoxy based microfilm is divided into 10-20 sections.

Another aspect of the present invention directs to the method of microfilter fabrication, comprising the following steps: using laser ablation in a non-epoxy based microfilm to form microholes in a predetermined pattern; and patterning the surface of the non-epoxy based microfilm into predetermined sections. In one embodiment, the laser is UV laser. In certain embodiments, a UV laser is used to fabricate the microholes through the non-epoxy based microfilm. The UV laser is short in wavelength and produces fine holes in the non-epoxy based microfilm. The excimer laser (UV laser) has the advantage of high precision for microholes formation in the non-epoxy based microfilm with low thermal buildup. The energy and pulse of the laser need to be optimized for the non-epoxy based microfilm which is formed by a specific polymer. In an alternative embodiment, different kinds of laser, such as CO₂, Nd:YAG, etc. may be used for microholes generation.

In one embodiment, the non-epoxy based microfilm is composed of a transparent polymer without an epoxide chain. In a preferred embodiment, the material of the non-epoxy based microfilm is a transparent plastic material.

In certain embodiments, the excimer laser may have projected directly to the non-epoxy based microfilm using focus lenses. The use of the focus lenses allows the formation of the taper angle of microholes to be controlled. Using the precise movement of the non-epoxy based microfilm, microholes design is translated to the membrane for microfilter fabrication. In an alternative embodiment, a laser mask is used to project multiple laser beams to the non-epoxy based microfilm and generate multiple arrays of microholes. This method provides high throughput of microholes perforation in the non-epoxy based microfilm.

In certain embodiments, the microfilter may be used for filtering biomolecules from biofluids. In one embodiment, the biofluids sample may be blood, urine, dialysis fluid, saliva, etc. In some embodiments, the microfilter may be used to screen nucleated cells from the blood having bigger size than the microholes such as circulating tumor cells (CTCs), colony-forming cells (CFCs), neutrophils, etc. In one embodiment, the sample is biofluid, and the targets are biomolecules.

The surface of the non-epoxy based microfilm can be patterned into different sections. A number of microholes is distributed into different sections. In certain embodiments, the surface of the non-epoxy based microfilm is patterned into predetermined sections, for example, 16 sections, to locate the isolated targets and quickly enumerate the number of the isolated targets.

Another aspect of the present invention is directed to a microfilter holder unit, or a microfiltration unit. The microfiltration unit comprises an upper frame and a bottom frame. The two frames have cylindrical side walls. The upper frame is connected with a side module which allows the sample inlet orifice to be adjusted from a wider opening to a narrower opening. The two frames are connected with each other through a screw coupling. The microfilter is sandwiched between the upper frame and the bottom frame of the microfilter holder unit. The microfilter holder unit is designed in such a way that it provides a linear passage of sample at the top and the bottom of the microfilter. The molecules in a sample having a size bigger than the microholes stay at the top of the microfilter surface while the remaining smaller molecules are filtered out through the microfilter.

### BRIEF DESCRIPTION OF THE DRAWINGS

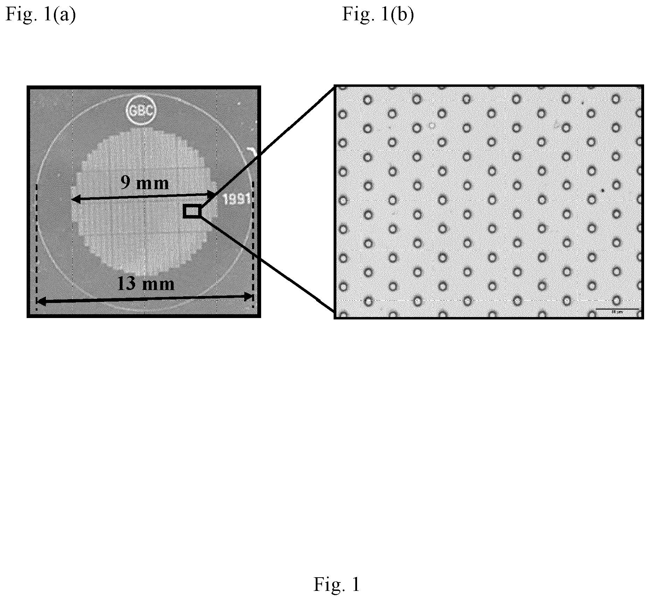

Fig. 1 shows a diagram of a microfilter. Fig. 1(a) shows a microfilter structure having a microfilm with a diameter of 13 mm and a filtration area with a diameter of 9 mm. Fig. 1(b) shows the partial enlarged view of the microfilter showing perforated microholes designed to penetrate through the microfilm.

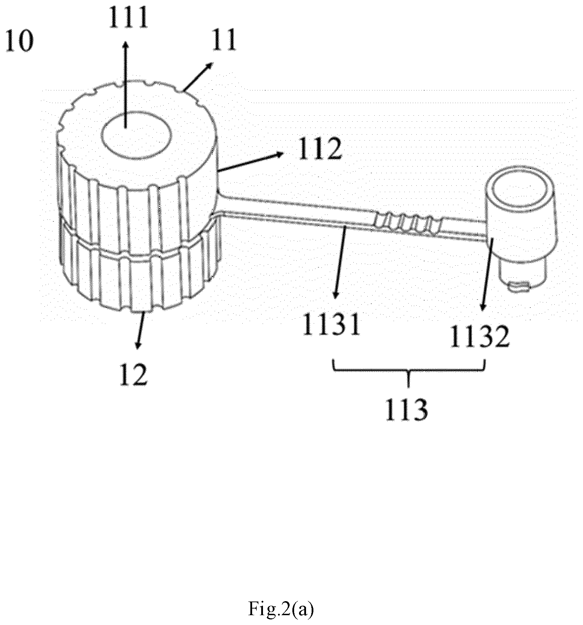

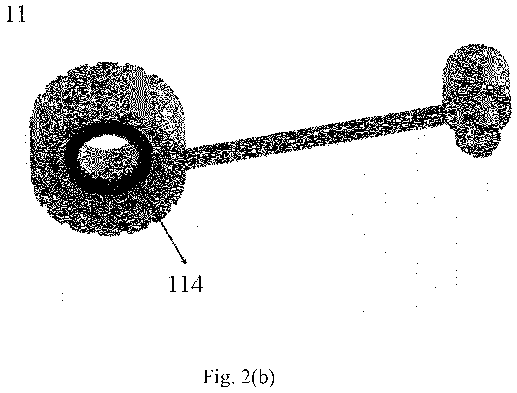

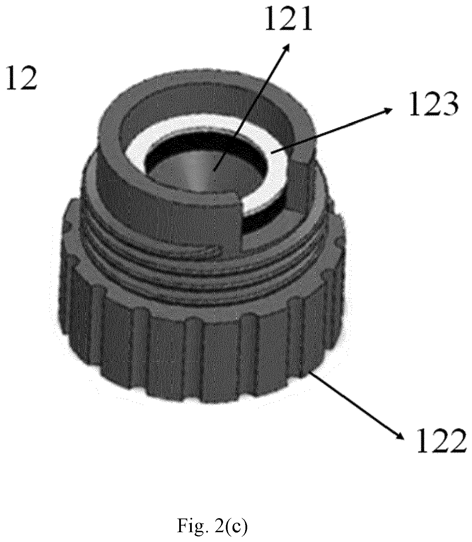

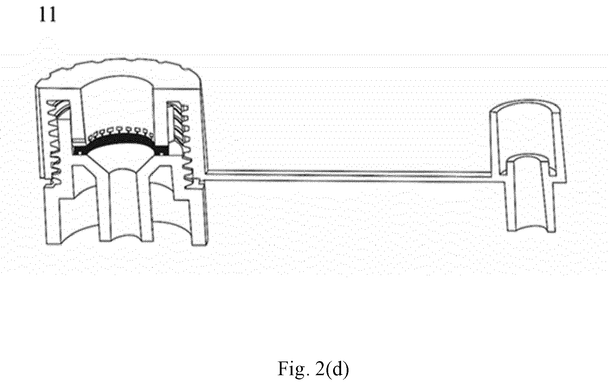

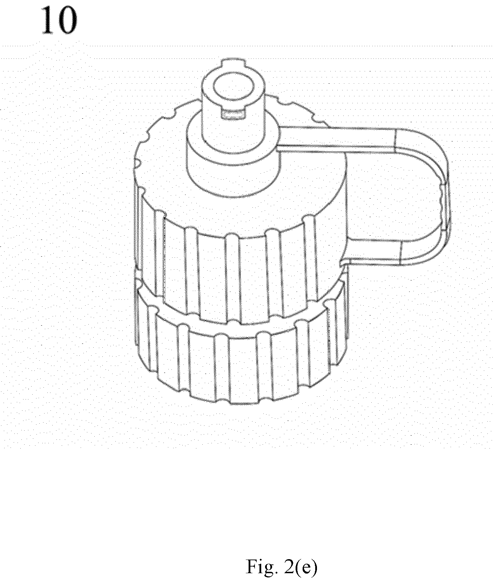

Fig. 2(a) shows the overall structure of the microfiltration unit of the invention. Fig. 2(b) shows the upper frame of the microfiltration unit of the invention. Fig. 2(c) shows the lower frame of the microfiltration unit of the invention, wherein the microfilter is sandwiched between an upper gasket and a lower gasket by screw coupling of the frames. Fig. 2(d) shows the cross-sectional side view of the microfilter unit, illustrating an assembly of the upper frame and the lower frame. Fig. 2(e) shows an assembly of the microfiltration unit of the invention when in use.

### EXAMPLES

The present invention may be implemented in many different forms and should not be construed as limited to the examples set forth herein. The described examples are not limited to the scope of the present invention as described in the claims.

As shown in Fig. 1, the microfilter of the present invention comprised a microfilm which was composed of a transparent polymer without an epoxide chain. Therefore, the microfilm was a non-epoxy based microfilm, and the material of the non-epoxy based microfilm was a transparent plastic material. Fig. 1(a) shows a microfilter structure having a microfilm with a diameter of 13 mm and a filtration area with a diameter of 9 mm. The surface of the microfilm of the microfilter was patterned into predetermined sections, for example, 16 sections (as shown in Fig.1(a)), to locate the isolated targets and quickly enumerate the number of the isolated targets. In addition, the microfilm was further coated with a thin film to facilitate the filtration process. The thickness of the non-epoxy based microfilm was less than or equal to 25 µm.

Fig. 1(b) shows the perforated microholes designed to penetrate through the microfilm. The perforated microholes were used for filtering or isolating targets. Therefore, the diameter of the perforated microholes depended on the size of the screening targets. The target was isolated on the surface of the microfilm.

There was a plurality of circular perforated microholes with a diameter of approximately 7 µm in the microfilm. In addition, the shape of the perforated microholes was rectangular or hexagonal, depending on the screening targets. The perforated microholes were patterned in a uniform array in a straight, staggered or hexagonal geometry in the microfilm. The perforated microholes in the microfilm had the cylindrical walls or the tapered walls.

The number of the perforated microholes was at least 50,000, and the gap between two adjacent perforated microholes was optimized at about 20 µm. A number of perforated microholes was distributed into different sections.

The microfiltration unit was operated by applying negative pressure at the bottom. The sample passed through a top inlet of the microfiltration unit to a bottom outlet of the microfiltration unit due to a pressure difference. There was a microfilter in the microfiltration unit, wherein the microfilter was a thin film with multiple perforated microholes. The molecules in a sample having larger size than the microholes in the microfilter were isolated at the surface of the microfilter while smaller molecules were filtered through the microholes to the outlet. The negative pressure was applied by using a controlled suction pump.

The microfilter fabricated using perforation of non-epoxy-based microfilm using different lasers such as UV, visible and Infrared lasers. The microholes were generated by using the above lasers, the shorter wavelength provided microholes with good quality and a submicron diameter. The excimer lasers such as Krf & XeBr, etc. provided a fine cylindrical microholes structure.

The microfilter was used in medical diagnosis and prognosis. It isolated larger nucleated cells from the blood. The enumeration and collection of nucleated cell indicated the disease state. The isolated cells were further utilized for downstream analysis such as culture, immunostaining, PCR (Polymer chain reaction), NGS (Next-Generation sequencing), etc.

The microfilter was used for non-invasive tumor metastasis diagnosis by identifying the circulating tumor cells (CTCs). The tumor cells were larger in size than normal cells. The tumor cells were isolated by passing the blood through the microfilter. The isolated CTCs at microfilter surface were identified and enumerated by immunofluorescent staining and observed under fluorescence microscope.

In another example of the present invention, the microfiltration unit was used for non-invasive prenatal diagnosis by collecting colony-forming cells (CFCs) from the maternal blood. The CFC cells are bigger than normal blood components. The isolated CFCs were analyzed for genetic analysis by using FISH, NGS, etc.

In another example of the present invention, the microfilter was used for separating micro aggregates from the blood. In particular, preserved blood may have micro aggregates during storage. The microfilter was used to clear the micro aggregates before blood transfusion to a patient.

Please refer to Figs. 2(a), 2(b), 2(c), 2(d) and 2(e) together. A microfiltration unit 10, which comprised: an upper frame 11, including an inlet orifice 111 on the top side, an upper side wall 112, and a side module 113 which has a flexible stripe 1131 with one end thereof connected with and extended from the lower part of the upper side wall of the upper frame, and a transforming inlet head 1132 connected with the other end of the stripe and having one end to cover the top side of the upper frame 11 and the other end to be connected to a sample inlet orifice of an external sample inlet syringe (not shown) when in use, as shown in Fig. 2 (e); and a lower frame 12, including an outlet orifice 121 and a lower cylindrical side wall 122, wherein the upper frame 11 and the lower frame 12 were connected with each other through screw coupling, a microfilter (not shown) is sandwiched between the upper frame 11 and the lower frame 12, and the transforming inlet head was replaceable with a different inlet head so as to correspondingly engage with the external sample inlet syringe with a different sample inlet orifice, thereby providing a linear passage of the sample injected from the external sample inlet syringe and flowing through the inlet orifice of the upper frame 11 to the outlet orifice of the lower frame 12. The microfilter was a non-epoxy based microfilm with a plurality of microholes.

In the microfiltration unit of the present invention, the side module 113 of the upper frame 11 allowed the sample inlet orifice to be adjusted from a wider opening to a narrower opening.

In the microfiltration unit of the present invention, the upper frame 11 further comprised an upper gasket 114 disposed at an inner peripheral wall thereof, the lower frame 12 further comprised a lower gasket 123 disposed at an inner peripheral wall thereof, and the microfilter was sandwiched between the two gaskets.

The microfiltration unit of the present invention further comprised two gaskets respectively placed below and above the microfilter to avoid sample leakage and to hold the microfilter in place, wherein the material of the gaskets was rubber.

In the microfiltration unit of the present invention, the upper frame and the side module; including the flexible stripe and the transforming inlet head, were integrated into one piece.

In one embodiment, the flexible stripe was removably engaged with the lower part of the upper side wall, or removably engaged with the transforming inlet head, wherein the engagement was performed via a male and a female pair connector (not shown), such as a magic tape or other engageable elements.

In the microfiltration unit of the present invention, the diameter of the microfilter was 13 mm and the diameter of a filtration area was 9 mm.

The microfiltration unit of the present invention further comprised a controlled suction pump (not shown) for applying a negative pressure to the outlet orifice such that the linear passage of the sample was directed by a pressure difference.

## Claims

1. A microfilter, comprising:
a non-epoxy based microfilm; and
a plurality of microholes provided on the non-epoxy based microfilm and penetrating therethrough via laser ablation, wherein the surface of the non-epoxy based microfilm is patterned into predetermined sections for locating isolated targets and enumeration.

2. The microfilter of claim 1, wherein the material of the non-epoxy based microfilm is a transparent plastic material, especially at least one of the materials of the group comprising polyimide, polycarbonate, polyethylene, polyethylene terephthalate, polyethylene naphthalate, polymethyl methacrylate and polystyrene.

3. The microfilter of claim 1 or 2, wherein the surface of the non-epoxy based microfilm further comprises a thin film to facilitate filtration function.

4. The microfilter of any of the preceding claims, wherein the microholes are circular microholes.

5. The microfilter of claim 4, wherein the mean diameter of each of the microholes is less than or equal to 10 µm.

6. The microfilter of any of claims 1 to 3, wherein the microholes are rectangular microholes or hexagonal microholes.

7. The microfilter of any of claims 1 to 5, wherein the microholes have cylindrical walls feeding through the non-epoxy based microfilm.

8. The microfilter of any of the preceding claims, wherein the microholes have tapered walls feeding through the non-epoxy based microfilm.

9. The microfilm of any of the preceding claims, wherein the thickness of the non-epoxy based microfilm ranges from 5 to 25 µm and / or wherein the number of the microholes in the non-epoxy based microfilm is more than 50,000.

10. The microfilter of any of the preceding claims, wherein the distance between two adjacent microholes is at least 15 µm and /or wherein the number of the patterned predetermined sections on the surface of the non-epoxy based microfilm is 16 sections.

11. A method for fabricating a microfilter, especially a microfilter according to the preceding claims, comprising the following steps of:
using laser ablation in a non-epoxy based microfilm to form microholes in a predetermined pattern; and
patterning the surface of the non-epoxy based microfilm into predetermined sections.

12. The method of claim 11, wherein the material of the non-epoxy based microfilm is a transparent plastic material and / or wherein the laser is a UV laser.

13. The method of claim 11, wherein the non-epoxy based microfilm is exposed and perforated by the UV laser and / or wherein the number of the patterned predetermined sections on the surface of the non-epoxy based microfilm is 16 sections.

14. A microfiltration unit, comprising:
an upper frame, including an inlet orifice on the top side, an upper side wall, and a side module which includes a flexible stripe with one end thereof connected with and extended from the lower part of the upper side wall of the upper frame, and a transforming inlet head connected with the other end of the flexible stripe and having one end to be engaged with the top side of the upper frame and the other end to be connected to a sample inlet orifice of an external sample inlet syringe; and
a lower frame, including an outlet orifice and a lower cylindrical side wall, wherein the upper frame and the lower frame are connected with each other through screw coupling, a perforated non-epoxy based microfilter is sandwiched between the upper frame and the lower frame, and the transforming inlet head is replaceable with a different inlet head so as to correspondingly engage with the external sample inlet syringe having a different sample inlet orifice, thereby providing a linear passage of the sample injected from the external sample inlet syringe and flowing through the inlet orifice of the upper frame to the outlet orifice of the lower frame.

15. The microfiltration unit of claim 14, wherein the upper side wall and the side module, including the flexible stripe and the transforming inlet head, are integrated into one piece or wherein the flexible stripe is removably engaged with the lower part of the upper side wall or removably engaged with the transforming inlet head.

16. The microfiltration unit of claim 14 or 15, wherein the side module of the upper frame is allowed to adjust the sample inlet orifice from a wider opening to a narrower opening.

17. The microfiltration unit of any of claims 14 to 16, wherein the upper frame further comprises an upper gasket disposed at an inner peripheral wall thereof, the lower frame further comprises a lower gasket disposed at an inner peripheral wall thereof, and the microfilter is sandwiched between the two gaskets and / or wherein the microfiltration further comprises two gaskets respectively placed below and above the microfilter to avoid sample leakage and to hold the microfilter in place.

18. The microfiltration unit of any of claims 14 to 17, wherein the side module is integrated with the sample inlet syringe and / or wherein the diameter of the microfilter is 13 mm and the diameter of a filtration area is 9 mm.

19. The microfiltration unit of any of claims 14 to 17, further comprising a controlled suction pump for applying a negative pressure to the outlet orifice such that the linear passage of the sample is directed by a pressure difference.
